# EUROPEAN PATENT APPLICATION

(11) **EP 4 746 328 A1**
(43) Date of publication of application: **20.05.2026**
(21) Application number: 23945358.2
(22) Date of filing: 14.07.2023
(51) Int. Cl.: H04L 5/00

(54) **NTN-BASED COMMUNICATION METHOD, APPARATUS, DEVICE, MEDIUM, AND PROGRAM PRODUCT**

(71) Applicant: GUANGDONG OPPO MOBILE TELECOMMUNICATIONS CORP., LTD., Dongguan, Guangdong 523860 (CN)
(72) Inventor: XING, Jinqiang, Dongguan, Guangdong 523860 (CN)
(74) Representative: Novagraaf Technologies
(86) International application number: PCT/CN2023/107512
(87) International publication number: WO 2025/015459

(57) **Abstract**

The present application relates to the field of satellite communications, and discloses a non-terrestrial network (NTN)-based communication method, an apparatus, a device, a medium, and a program product. The method is executed by a terminal device. The method comprises: sending or receiving an NTN signal in a terrestrial network (TN) spectrum. According to the method, by sending or receiving an NTN signal in a TN spectrum, an NTN can multiplex the working frequency band of a TN, thereby increasing usage scenarios of the NTN, solving the problem that the number of frequency bands which can be used by the NTN is small, and improving the NTN communication capability.

## Description

### TECHNICAL FIELD

The present disclosure relates to the field of satellite communications, and in particular, relates to a communication method and apparatus based on a non-terrestrial network (NTN), and a device, a medium, and a program product thereof.

### RELATED ART

In an NTN communication system, a satellite communication system is a typical operating scenario. A satellite forwards signals from a terrestrial base station, and thus a terminal device in a region that cannot be covered by the terrestrial base station communicates with the satellite, such that a communication range is expanded.

Currently, the frequency bands used for the satellite communication are specially allocated and are not used for a terrestrial network (TN) communication system. However, the TN communication system occupies a large number of frequency bands, such that fewer frequency bands for the satellite communication are available.

### SUMMARY

Embodiments of the present disclosure provide a communication method and apparatus based on an NTN, and a device, a medium, and a program product thereof. The technical solution are as follows.

According to an aspect of the embodiments of the present disclosure, a communication method based on an NTN is provided. The method is performed by a terminal device, and includes:
transmitting or receiving an NTN signal within a TN spectrum.

According to another aspect of the embodiments of the present disclosure, a communication method based on an NTN is provided. The method is performed by an NTN satellite, and includes:
transmitting or receiving an NTN signal within a TN spectrum.

According to another aspect of the embodiments of the present disclosure, a terminal communication apparatus is provided. The apparatus includes:
a transmitting module, configured to transmit or receive an NTN signal within a TN spectrum.

According to another aspect of the embodiments of the present disclosure, a network communication apparatus is provided. The apparatus includes:
a transmitting module, configured to transmit or receive an NTN signal within a TN spectrum.

According to another aspect of the embodiments of the present disclosure, a terminal device is provided. The terminal device includes:
a processor;
a transceiver, connected to the processor; and
a memory, configured to store one or more executable instructions of the processor;
wherein the processor is configured to load and execute the one or more executable instructions to perform the communication method based on the NTN described above.

According to another aspect of the embodiments of the present disclosure, an NTN satellite is provided. the NTN satellite includes:
a processor;
a transceiver, connected to the processor; and
a memory, configured to store one or more executable instructions of the processor;
wherein the processor is configured to load and execute the one or more executable instructions to perform the communication method based on the NTN described above.

According to another aspect of the embodiments of the present disclosure, a computer-readable storage medium is provided. The computer-readable storage medium stores one or more programs, wherein the one or more programs, when loaded and run by a processor, cause the processor to perform the communication method based on the NTN described above.

According to another aspect of the embodiments of the present disclosure, a computer program product or a computer program is provided. The computer program product or the computer program includes one or more computer instructions, wherein the one or more computer instructions are stored in a computer-readable storage medium, and when read from the computer-readable storage medium and executed by a processor, cause the processor to perform the communication method based on the NTN described above.

The technical solution according to the embodiments of the present disclosure may include the following beneficial effects.

The NTN signal is transmitted or received within the TN spectrum, such that operating frequency bands of the TN are multiplexed by the NTN. In this way, the use scenarios of the NTN diversify, the problem of a small number of frequency bands available for the NTN is solved, and the NTN communication capability is improved.

### BRIEF DESCRIPTION OF DRAWINGS

For clearer descriptions of the technical solutions in embodiments of the present disclosure, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 is a schematic diagram of a satellite communication system according to some embodiments of the present disclosure;
FIG. 2 is a schematic diagram of a satellite communication scenario according to some embodiments of the present disclosure;
FIG. 3 is s a schematic diagram of a satellite communication scenario according to some embodiments of the present disclosure;
FIG. 4 is a schematic diagram of a satellite communication scenario according to some embodiments of the present disclosure;
FIG. 5 is a flowchart of a communication method based on an NTN according to some embodiments of the present disclosure;
FIG. 6 is a flowchart of a communication method based on an NTN according to some embodiments of the present disclosure;
FIG. 7 is a flowchart of a communication method based on an NTN according to some embodiments of the present disclosure;
FIG. 8 is a schematic diagram of a communication method based on an NTN according to some embodiments of the present disclosure;
FIG. 9 is a schematic diagram of a time window configuration according to some embodiments of the present disclosure;
FIG. 10 is a flowchart of a communication method based on an NTN according to some embodiments of the present disclosure;
FIG. 11 is a flowchart of a communication method based on an NTN according to some embodiments of the present disclosure;
FIG. 12 is a schematic diagram of a communication method based on an NTN according to some embodiments of the present disclosure;
FIG. 13 is a flowchart of a communication method based on an NTN according to some embodiments of the present disclosure;
FIG. 14 is a flowchart of a communication method based on an NTN according to some embodiments of the present disclosure;
FIG. 15 is a block diagram of a terminal communication apparatus according to some embodiments of the present disclosure; and
FIG. 16 is a block diagram of a network communication apparatus according to some embodiments of the present disclosure;
FIG. 17 is a schematic structural diagram of a terminal device or an NTN satellite according to some embodiments of the present disclosure.

### DETAILED DESCRIPTION

For clearer descriptions of the objectives, technical solutions, and advantages of the present disclosure, embodiments of the present disclosure are further described in detail hereinafter and thus reference may be made to the accompanying drawings. Exemplary embodiments are described herein in detail, examples of which are represented in the accompanying drawings. When the following description relates to the accompanying drawings, the same numerals in different accompanying drawings represent the same or similar elements unless otherwise indicated. The embodiments described in the following exemplary embodiments do not represent all implementations consistent with the present disclosure. Instead, the embodiments are only examples of apparatuses and methods consistent with some aspects of the present disclosure as detailed in the appended claims.

The terms used in the present disclosure are used solely for the purpose of describing particular embodiments, and are not intended to limit the present disclosure. The singular forms of "a," "said," and "the" used in the present disclosure and the appended claims are also intended to include the plural forms, unless the context clearly indicates otherwise. It should also be understood that the term "and/or" used herein refers to and includes any or all possible combinations of one or more of the associated listed items.

It should be understood that while the terms such as first, second, third, and the like may be used to describe various types of information in the present disclosure, the information should not be limited to these terms. The terms are only used to distinguish the same type of information from one another. For example, without departing from the scope of the present disclosure, first information may also be referred to as second information, and similarly, second information may be referred to as first information. Depending on the context, as used herein, the phrase "if" can be interpreted as "in a case where" or "when" or "in response to determining".

Some of the technical knowledge according to the present disclosure is first described:

### NTN technology:

The NTN technology provides communication services to a terrestrial user via the NTN satellites (or drones) rather than the terrestrial base station. An NTN communication system includes at least one of a satellite communication system or a height platform communication system (e.g., an airplane-based communication system, a hot-air-balloon-based communication system). Within the systems, the satellite communication system is a typical operating scenario.

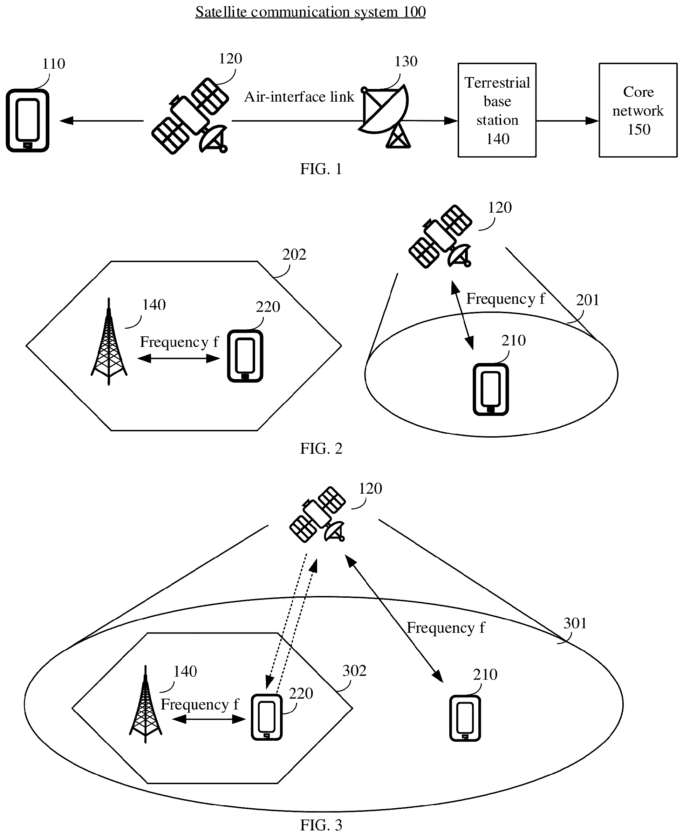

FIG. 1 is a schematic diagram of a satellite communication system 100 according to some embodiments of the present disclosure. The satellite communication system 100 includes: a terminal device 110, a satellite 120, a gateway 130, a terrestrial base station 140, and a core network 150. An air-port link is established between the satellite 120 and the terrestrial base station 140 through the gateway 130. The satellite 120 may forward signals from the terrestrial base station 140 to cover regions where the signals from the terrestrial base station 140 do not cover. In the regions, the terminal device 110 is in communication with the corresponding satellite 120. In particular, the satellite 120 may effectively cover regions where the signals from the terrestrial base station 140 do not cover, such as remote regions, deserts, mountains, oceans, and the like. In the embodiments of the present disclosure, the NTN satellite is abbreviated as the satellite, and the satellite 120 is the NTN satellite 120.

The terminal device 110 according to the embodiments of the present disclosure may include various handheld devices, in-vehicle devices, wearable devices, computing devices, or other processing devices connected to a wireless modem, and various forms of user equipments (UEs), mobile stations (MSs), terminal devices, Internet of things devices, and the like, having wireless communication functions. The terminal device 110 may be at least one of a cellular phone, a tablet computer, an e-book reader, a laptop computer, a desktop computer, a television set, a game console, an augmented reality (AR) terminal, a virtual reality (VR) terminal, a mixed reality (MR) terminal, a wearable device, a handle, an electronic label, a controller, or the like. For convenience of description, in the embodiments of the present disclosure, the above-mentioned devices are collectively referred to as the terminal device 110. In some embodiments of the present disclosure, the UE represents the terminal device, and the network device is the base station or the satellite.

Taking a cellular communication network as an example, a terrestrial base station 140 is a device that is configured to provide wireless communication functions for the terminal device 110. The terrestrial base station 140 may include various forms of macro base stations, micro base stations, relay stations, access points, and the like. Names of the devices having the function of the base station may be different in systems using different wireless access technologies. For example, in a 5-th generation new radio (5G NR) communication system, devices having the function of the base station are referred to as a next generation node B (gNB). As the communication technology evolves, the name "base station" may change. For convenience of description, in the embodiments of the present disclosure, the devices providing wireless communication functions for the terminal device 110 are collectively referred to as a base station.

In the embodiments of the present disclosure, the terms "network" and "system" are often used interchangeably, but the person skilled in the art can understand the meanings. The technical solutions according to the embodiments of the present disclosure is applicable to a long-term evolution (LTE) system, a 5G system, a subsequent evolutionary system of a 5G NR system, or other communication systems, which is not limited in the embodiments of the present disclosure.

The satellite communication system 100 has different characteristics from the terrestrial communication system due to the mobile characteristics of the satellite 120. For example, the cell moves at a high speed due to the high-speed movement of the satellite 120, and the terminal device 110 has a less mobility. In addition, a communication distance between the terminal device 110 and the satellite 120 is much greater than a communication distance between the terminal device 110 and the terrestrial base station 140, such that a higher transmit power of the terminal device 110 is required, and the satellite 120 has a greater antenna array, a higher receiver sensitivity, and a stronger reception and demodulation capability for weak signals.

### · Usage of a satellite spectrum:

Spectrum currently used for the satellite communication is specifically allocated, and the spectrum may not be used for terrestrial network communication services. Similarly, the spectrum used for terrestrial network communication services may not be used for the satellite communication to avoid mutual interference and influence.

### Satellite communication scenarios:

Satellite communication scenarios include at least one of the following scenarios.
(1) an NTN coverage is outside a TN coverage.

FIG. 2 is a schematic diagram of a satellite communication scenario according to some embodiments of the present disclosure. In the scenario, a region 201 corresponding to an NTN coverage provided by a satellite 120 is outside a region 202 corresponding to a TN coverage provided by a terrestrial base station 140. For example, the region 201 is in a sea or in a desert. The NTN and the TN use the same frequency f to transmit signals. Signal transmission and reception between the first terminal device 210 in the region 201 and the satellite 120 do not affect the TN.

(2) The NTN coverage is overlapped with the TN coverage, and the first terminal device is outside the TN coverage.

FIG. 3 is a schematic diagram of a satellite communication scenario according to some embodiments of the present disclosure. In the scenario, a region 301 corresponding to an NTN coverage provided by a satellite 120 is overlapped with a region 302 corresponding to a TN coverage provided by a terrestrial base station 140. A first terminal device 210 is outside the region 302 and within the region 301. In the scenario, the region 301 is usually much greater than the region 302, and the region 301 may be overlapped with a plurality of regions 302. The embodiments of the present disclosure are illustrated by taking one region 302 as an example.

In the scenario, possible interference cases are illustrated as dotted lines in FIG. 3, including the following cases.
2-1. An uplink signal transmitted by a second terminal device 220 to the terrestrial base station 140 may interfere with reception, by the satellite 120, of an uplink signal from the first terminal device 210.
2-2. A downlink signal transmitted by the satellite 120 to the first terminal device 210 may interfere with reception, by the second terminal device 220, of a downlink signal from the terrestrial base station 140 .

(3) The NTN coverage is overlapped with the TN coverage, and the first terminal device is within the TN coverage;

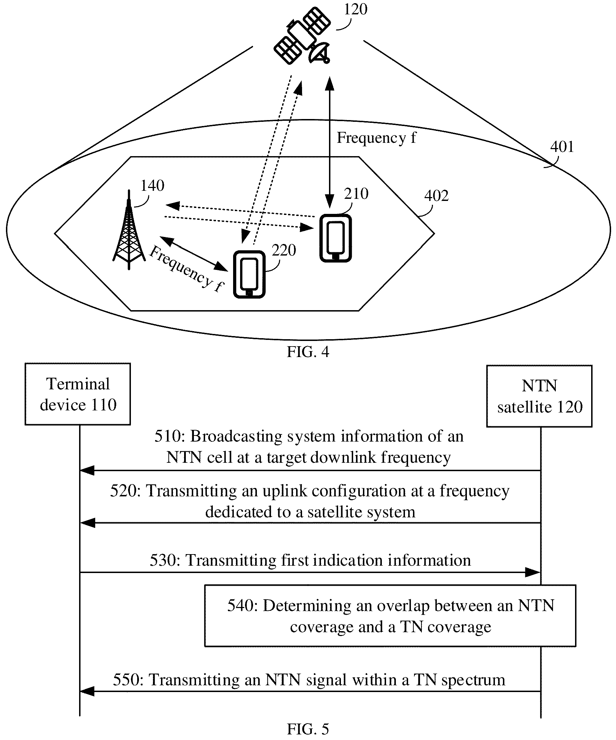

FIG. 4 is a schematic diagram of a satellite communication scenario according to some embodiments of the present disclosure. In the scenario, a region 401 corresponding to an NTN coverage provided by a satellite 120 is overlapped with a region 402 corresponding to a TN coverage provided by a terrestrial base station 140. A first terminal device 210 is within the region 402. In the scenario, the region 401 is usually much greater than the region 402, and the region 401 may be overlapped with a plurality of regions 402. The embodiments of the present disclosure are illustrated by taking one region 402 as an example.

In the scenario, possible interference cases are illustrated as dotted lines in FIG. 3, including the following cases.
3-1. An uplink signal transmitted by the first terminal device 210 to the satellite 120 may interfere with reception, by the terrestrial base station 140, of the uplink signal from the second terminal device 220.
3-2. A downlink signal transmitted by the terrestrial base station 140 to the second terminal device 220 may interfere with reception, by the first terminal device 210, of the downlink signal from the satellite 120.
3-3. An uplink signal transmitted by the second terminal device 220 to the terrestrial base station 140 may interfere with reception, by the satellite 120, of the uplink signal from the first terminal device 210.
3-4. A downlink signal transmitted by the satellite 120 to the first terminal device 210 may interfere with reception, by the second terminal device 220, of the downlink signal from the terrestrial base station 140.

A communication distance between the terminal device and the satellite is greater than a communication distance between the terminal device and the terrestrial communication, and thus the terminal device has a stringent requirement for transmitting and receiving a communication signal. In addition, based on the propagation characteristics of the wireless signal, the lower frequency causes the less spatial propagation loss, and the higher frequency causes the greater spatial propagation loss. Therefore, a low-frequency signal has a stronger network coverage capacity and a lower loss. Therefore, in a case where a large number of the TN communication systems are in the current low-frequency band, few frequency bands are available for the NTN. However, the most valuable scenarios for the NTN are in places that are not be covered by the TN, such as a mountain, a desert, and an ocean. For the places, how to multiplex the TN spectrum for satellite communications is considered. Meanwhile , as the terminal devices supporting the TN actually have the capability to transmit and receive the signal in the TN spectrum, the terminal device may support the communication with the NTN without a hardware modification in the case where the NTN shares the present TN spectrum.

FIG. 5 is a flowchart of a communication method based on an NTN according to some embodiments of the present disclosure. The method is performed by a terminal device 110 and an NTN satellite 120, and includes the following processes.

In S510, the NTN satellite 120 broadcasts system information of an NTN cell at a target downlink frequency.

The target downlink frequency is within a TN spectrum range.

In the case where the NTN satellite 120 determines to multiplex the target downlink frequency of the TN, the NTN satellite 120 broadcasts the system information of the NTN cell at the frequency, such that the terminal device 110 to read the system information and access the NTN.

In some embodiments, S510 is omitted, and S520 is performed.

In S520, the NTN satellite 120 transmits an uplink configuration at a frequency dedicated to a satellite system.

The uplink configuration includes the target uplink frequency. The target uplink frequency is used for transmission of an uplink signal and is within the TN spectrum.

In some embodiments, in the case where the NTN satellite 120 may only multiplex the target uplink frequency, the terminal device 110 fails to read the system information broadcast by the NTN satellite 120. In this case, the NTN satellite 120 configures the target uplink frequency to the terminal device 110 at the frequency dedicated to the satellite system, and the terminal device 110 transmits the uplink signal at the target uplink frequency.

In some embodiments, S520 is omitted, and S530 is performed upon S510.

In S530, the terminal device 110 transmits first indication information.

In some embodiments, the first indication information is used to indicate whether the terminal device is within the TN coverage at the target frequency, or the first indication information is used to indicate whether the TN coverage at the target frequency is available at a position of the terminal device.

In some embodiments, the first indication information is that a device is within the TN coverage at the target frequency or outside the TN coverage at the target frequency. Alternatively, the first indication information is that the TN coverage of the target frequency is available or is unavailable at the position of the terminal device, and the like.

In some embodiments, the first indication information is referred to as at least one of: an indication of the TN coverage at the target frequency, an indication of the TN coverage, or an indication of the TN coverage region at the target frequency, which is not limited in the embodiments of the present disclosure, and the embodiments are illustrated using an example of the first indication information.

In some embodiments, the terminal device 110 determines a TN coverage at available the position of the terminal device 110 by measuring a strength of the downlink signal from the TN base station to transmit the first indication information, for example, by measuring at least one of a signal strength indicator (SSI), a received signal strength indicator (RSSI), a reference signal received power (RSRP), a reference signal received quality (RSRQ), a signal to interference plus noise ratio (SINR), or a received signal code power (RSCP).

In the case where the measured signal strength is greater than or equal to a first threshold value, the TN coverage is available at the position of the terminal device 110. In the case where the measured signal strength is less than the first threshold value, the TN coverage is unavailable at the position of the terminal device 11.

Exemplarily, in the case where the TN coverage available at the position of the terminal device 110 is determined by measuring the RSSI, and the first threshold value is -100 dBm, the TN coverage is available at the position of the terminal device 110 when the measured RSSI is - 50 dBm greater than -100 dBm, and the TN coverage is unavailable at the position of the terminal device 110 when the measured RSSI is -120 dBm less than -100 dB m.

In some embodiments, the terminal device 110 transmits a current geographic position of the terminal device 110 along with the first indication information. The NTN satellite 120 determines the TN coverage of each terminal device 110 within the NTN coverage by receiving the first indication information and the current geographic position from a plurality of terminal devices 110. For example, the NTN satellite 120 determines, based on the first indication information, that the TN coverage is unavailable at the position of the terminal device 110, and determines, based on the current geographic position, that the terminal device 110 is at the geographic position illustrated in FIG. 2.

In S540, the NTN satellite 120 determines an overlap between an NTN coverage and a TN coverage.

In some embodiments, the NTN satellite 120 determines the overlap between the NTN coverage and the TN coverage based on the received first indication information. For example, the first indication information indicates that the TN coverage is available at the position of the terminal device 110, and the NTN satellite 120 determines that the NTN coverage is overlapped with the TN coverage.

In some embodiments, the NTN satellite 120 makes a comprehensive determination by receiving the first indication information from the plurality of terminal devices 110, and then determines the overlap between the NTN coverage and the TN coverage.

In some embodiments, the NTN satellite 120 determines the overlap between the NTN coverage and the TN coverage based on the received first indication information and the current geographic position of the terminal device 110. For example, the first indication information indicates that the TN coverage is unavailable at the position of the terminal device 110, and the current geographic position of the terminal device 110 indicates that the terminal device 110 is at a geographic position as illustrated in FIG. 3. The NTN satellite 120 determines that the NTN coverage is overlapped with the TN coverage, and that the terminal device 110 is outside the TN coverage.

In S550, the NTN satellite 120 transmits an NTN signal within a TN spectrum.

In some embodiments, the NTN satellite 120 receives the NTN signal within the TN spectrum.

In some embodiments, the NTN signal is transmitted at a target frequency, and the target frequency is within the TN spectrum.

By multiplexing the TN spectrum, the NTN satellite 120 transmits the NTN signal at a target frequency within the TN spectrum, such that the usage scenarios of the NTN satellite120 diversify, and the problem of a small number of frequency bands available for the NTN is solved.

In some embodiments, the target frequency includes:
a target uplink frequency, or
a target downlink frequency, or
a target uplink frequency and a target downlink frequency.

In some embodiments, in the case where the terminal device 110 is outside the TN coverage, and the TN coverage is overlapped with the NTN coverage, the target frequency includes the target uplink frequency. In this case, the NTN satellite 120 only multiplexes the target uplink frequency for uplink transmission with the terminal device 110, and adopts other frequencies for downlink transmission, such that interference of the downlink signal transmitted by the NTN satellite 120 to the terminal device 110 on another terminal device within the TN coverage is avoided.

In some embodiments, the NTN signal is transmitted over a first beam, or
the NTN signal is transmitted over at least one second beam, wherein a coverage of the second beam is smaller than a coverage of the first beam.

The NTN transmits the NTN signal over a wide beam (the first beam) for coverage to increase the coverage. However, the coverage of the wide beam is overlapped with the coverage of a plurality of TNs, such that the NTN is difficult to directly multiplex the uplink frequency and the downlink frequency of the TN. Thus, at least one narrow beam (the second beam) may be used to transmit the NTN signal to reduce the overlap between the NTN coverage and the TN coverage.

In some embodiments, the NTN signal is transmitted within a first time window.

The first time window is independent of a second time window. The first time window is configured to transmit the NTN signal, and the second time window is used to transmit the TN signal.

As the NTN and the TN use the same target frequency, the same frequency interference may be caused. Thus, a time-division multiplexing (TDM) mode is used. The first time window for transmitting the NTN signal is independent of the second time window for transmitting the TN signal.

In some embodiments, the first time window includes at least one of:
a time window configured in the uplink frequency, or
a time window configured in the downlink frequency.

The first time window may be configured in the uplink frequency, in the downlink frequency, or in both the uplink frequency and the downlink frequency.

In some embodiments, the first time window is referred to as an NTN multiplexing window, a multiplexing window, an NTN window, and the like, which is not limited in the embodiments of the present disclosure, and the embodiments are described using an example of the first time window.

In some embodiments, the time window configured in the uplink frequency the time window configured in the downlink frequency.

Alternatively, the time window configured in the uplink frequency is different from the time window configured in the downlink frequency.

The time window may be configured by the TN base station or may be predefined. The time window may be periodically configured, and configuration parameters include a window length, a window period, and the like.

In some embodiments, the NTN signal is transmitted within a time-domain unit corresponding to the target frequency.

The time-domain unit includes at least one of a slot, a system frame, a subframe group, a subframe, a slot group, a slot, a symbol group, a symbol. The specific type of the time-domain unit is not limited in the embodiments of the present disclosure, and is illustrated using an example of the slot.

In some embodiments, in the case where the terminal device is outside the TN coverage, and the TN coverage is overlapped with the NTN coverage, the time-domain unit includes an uplink time-domain unit corresponding to the target frequency, such as an uplink slot corresponding to the target frequency.

In this case, the NTN satellite 120 multiplexes only the uplink slot for uplink transmission with the terminal device 110, and adopts other frequencies or other slots downlink transmission, such that the interference of the downlink signal transmitted by the NTN satellite 120 to the terminal device 110 on another terminal device within the TN coverage is avoided.

In some embodiments, the terminal device 110 transmits the uplink signal over an uplink resource in a resource pool at the target frequency.

The target frequency is within the TN spectrum.

In some embodiments, in the case where the terminal device 110 is outside the TN coverage at the target frequency, and the terminal device fails to detect the system information of the NTN cell, the terminal device 110 transmits the uplink signal over the uplink resource in the resource pool at the target frequency.

In the case where the terminal device 110 is outside the TN coverage at the target frequency, and the NTN satellite 120 does not broadcast the system information, the terminal device 110 transmits the uplink signal over the uplink resource in the resource pool at the target frequency when the NTN satellite 120 passes through the position of the terminal device 110.

In summary, in the method according to the embodiments, the terminal device or the NTN satellite transmits or receives the NTN signal in the TN spectrum, such that the NTN multiplexes the operating frequency bands of the TN. Thus, the usage scenarios of the NTN diversify, the problem of a small number of frequency bands available for the NTN is solved, and the NTN communication capability is improved.

In the method according to the embodiments, the NTN satellite broadcasts the system information of the NTN cell at the target downlink frequency, such that the terminal device reads the system information, and accesses the NTN.

In the method according to the embodiments, the NTN satellite transmits an uplink configuration at a frequency dedicated to the satellite system, and the uplink configuration includes a target uplink frequency, such that the terminal device transmits the uplink signal at the target uplink frequency in the case where the NTN satellite only multiplexes the target uplink frequency.

In the method according to the embodiments, the terminal device transmits the uplink signal over the uplink resource in the resource pool at the target frequency without detecting system information of the NTN cell .

In the method according to the embodiments, the terminal device transmits the first indication information, and thus the NTN satellite determines the overlap between the NTN coverage and the TN coverage, such that the workload of the NTN satellite is reduced.

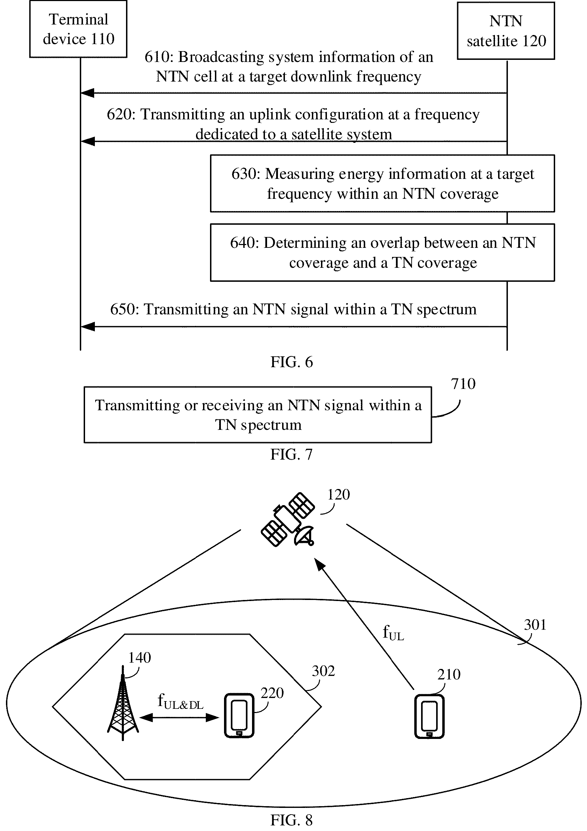

FIG. 6 is a flowchart of a communication method based on an NTN according to some embodiments of the present disclosure. The method is performed by a terminal device 110 and an NTN satellite 120, and includes the following processes.

In S610, the NTN satellite 120 broadcasts system information of an NTN cell at a target downlink frequency.

In some embodiments, S610 is omitted, and S620 is performed.

S610 and S510 are implemented in the same principle, and thus reference may be made to the specific implementation details of S510, which is not repeated herein.

In S620, the NTN satellite 120 transmits an uplink configuration at a frequency dedicated to a satellite system.

In some embodiments, S620 is omitted, and S630 is performed upon S610.

S620 and S520 are implemented in the same principle, and thus reference may be made to the specific implementation details of S520, which is not repeated herein.

In S630, the NTN satellite 120 measures energy information at a target frequency within an NTN coverage.

The energy information is used to indicate whether the NTN coverage is overlapped with the TN coverage.

In some embodiments, the NTN satellite 120 measures the energy information at the target frequency within the NTN coverage (typically the coverage of the first beam). In the case where the measured energy information is greater than a second threshold value, the TN is within the NTN coverage.

In some embodiments, the energy information is represented by at least one of the SSI, the RSSI, the signal-to-noise ratio (SNR), the RSRP, the RSRQ, the SINR, or the RSCP. The manner of representing the energy information is not limited in the embodiments of the present disclosure, and the embodiments are described using an example of the SNR. Exemplarily, in the case where the second threshold value is 20 dB, and the measured energy information is 25 dB greater than the second threshold value, the TN is within the coverage.

In S640. the NTN satellite 120 determines the overlap between the NTN coverage and the TN coverage.

In some embodiments, the NTN satellite 120 determines the overlap between the NTN coverage and the TN coverage based on the measured energy information. In the case where the measured energy information is greater than the second threshold value, the TN is within the NTN coverage, i.e., the NTN coverage is overlapped with the TN coverage.

In some embodiments, the NTN signal is transmitted within a first time window at the target frequency. Within the first time window, a plurality of NTN satellites 120 contend for the right to use the target frequency.

In the case where energy information measured by an NTN satellite 120 is greater than a third threshold value, other NTN satellites 120 occupy the target frequency. The third threshold value is equal to or not equal to the second threshold value. In this case, the energy information within the first time window is measured again upon a duration, or the energy information within another time window is measured. In the case where measured energy information is less than a fourth threshold value, the NTN satellite 120 transmits the NTN signal at the target frequency. The fourth threshold value is equal to or not equal to the third threshold value.

In S650, the NTN satellite 120 transmits an NTN signal within a TN spectrum.

S650 and S550 are implemented in the same principle, and thus reference may be made to the specific implementation details of S550, which is not repeated herein.

In summary, in the method according to the embodiments, the terminal device or the NTN satellite transmits or receives the NTN signal within the TN spectrum, such that the NTN multiplexes the operating frequency bands of the TN. Thus, the usage scenarios of the NTN diversify, the problem of a small number of frequency bands available for the NTN is solved, and the NTN communication capability is improved.

In the method according to the embodiments, the NTN satellite broadcasts the system information of the NTN cell at the target downlink frequency, such that the terminal device reads the system information, and accesses the NTN.

In the method according to the embodiments, the NTN satellite transmits an uplink configuration at a frequency dedicated to the satellite system, and the uplink configuration includes a target uplink frequency, such that the terminal device transmits the uplink signal at the target uplink frequency in the case where the NTN satellite only multiplexes the target uplink frequency.

In the method according to the embodiments, the NTN satellite measures the energy information at the target frequency within the NTN coverage to autonomously determine the overlap between the NTN coverage and the TN coverage, such that the workload of the terminal device and the power consumption of the terminal device are reduced.

FIG. 7 is a flowchart of a communication method based on an NTN according to some embodiments of the present disclosure. The method is performed by a terminal device, and includes the following process.

In S710, an NTN signal is transmitted or received within a TN spectrum.

In some embodiments, the NTN signal is transmitted at a target frequency. The target frequency is within the TN spectrum.

The TN spectrum represents a frequency distribution curve in the TN, and the NTN signal represents a signal that may be transmitted in the NTN.

By multiplexing the TN spectrum, the NTN satellite transmits the NTN signal to the terminal device at the target frequency in the TN spectrum, such that the usage scenarios of the NTN diversify, and the problem of a small number of frequency bands available for the NTN is solved.

In some embodiments, the target frequency includes:
a target uplink frequency, or
a target downlink frequency, or
a target uplink frequency and a target downlink frequency.

In a frequency division duplex (FDD) scenario, the target frequency includes the target uplink frequency or the target downlink frequency. In a time division duplex (TDD) scenario, the target frequency includes the target uplink frequency and the target downlink frequency.

In some embodiments, in the case where the terminal device is outside the TN coverage, and the TN coverage is overlapped with the NTN coverage, the target frequency includes the target uplink frequency. In this case, as illustrated in FIG. 8, an NTN satellite 120 multiplexes only a target uplink frequency fUL for uplink transmission with a first terminal device 210, and adopts other frequencies for downlink transmission. A terrestrial base station 140 transmits a signal with a second terminal device 220 at a frequency fUL&DL. By multiplexing only the target uplink frequency fUL, the interference of the downlink signal transmitted by the NTN satellite 120 to the first terminal device 210 on the second terminal device 220 within the TN coverage is avoided.

As the first terminal device 210 generally uses uplink enhancement methods, such as repeated transmission to increase the signal-to-noise ratio, and the uplink signal transmitted by the second terminal device 220 to the terrestrial base station 140 is weaker for the NTN satellite 120, the interference of the uplink signal transmitted by the second terminal device 220 on the NTN satellite 120 is not further considered, and the interference is within a controllable range.

In some embodiments, the NTN signal is transmitted within a first time window.

The first time window is independent of the second time window. The first time window is configured to transmit the NTN signal, and the second time window is configured to transmit the TN signal.

As the same target frequency for the NTN and the TN may cause the same frequency interference, the TDM is used. The first time window for transmitting the NTN signal is independent of the second time window for transmitting the TN signal.

In some embodiments, the first time window includes at least one of:
a time window configured in an uplink frequency, or
a time window configured in a downlink frequency.

The first time window may be configured in the uplink frequency, in the downlink frequency, or in both the uplink frequency and the downlink frequency.

In some embodiments, the first time window is referred to as an NTN multiplexing window, a multiplexing window, an NTN window, and the like, which is not limited in the embodiments of the present disclosure, and the embodiments are described using an example of the first time window.

In some embodiments, the time window configured in the uplink frequency is the same as the time window configured in the downlink frequency.

Alternatively, the time window configured in the uplink frequency is different from the time window configured in the downlink frequency.

The time window may be configured by the TN base station or may be predefined. The time window may be periodically configured, and configuration parameters include a window length, a window period, and the like.

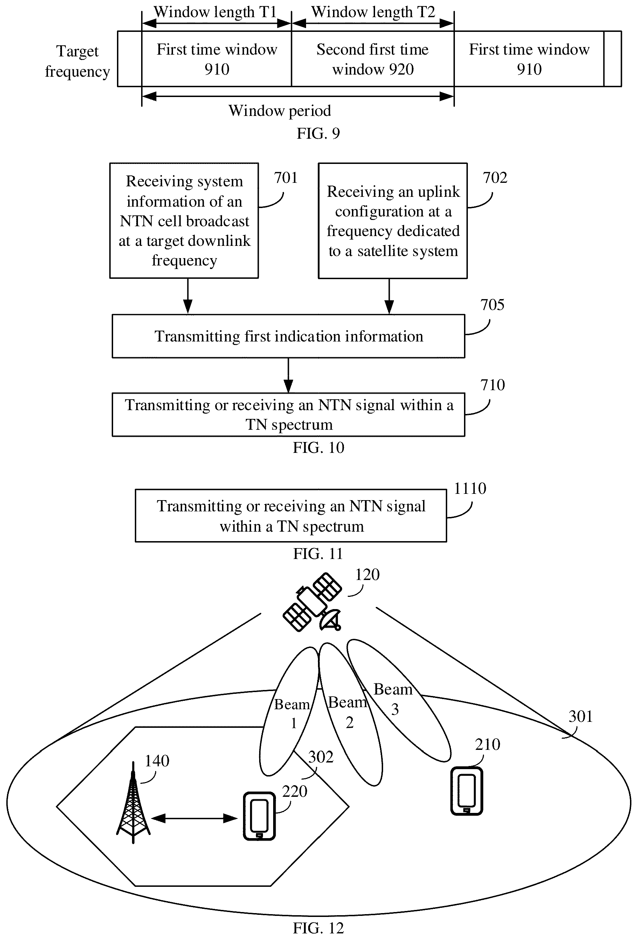

FIG. 9 is a schematic diagram of a time window configuration according to some embodiments of the present disclosure. A first time window 910 for transmitting an NTN signal at a target frequency has a window length T1. A second time window 920 for transmitting a TN signal has a window length T2. A window period between the first time window 910 and the second first time window 910 is T.

In some embodiments, the first time window 910 for transmitting the NTN signal has the window length T1, and the remaining time is used to transmit the TN signal.

In some embodiments, the NTN signal is transmitted within a time-domain unit corresponding to the target frequency.

The time-domain unit includes at least one of: a slot, a system frame, a subframe group, a subframe, a slot group, a slot, a symbol group, a symbol. The specific type of the time-domain unit is not limited in the embodiments of the present disclosure, and is illustrated using an example of the slot.

In some embodiments, in the case where the terminal device is outside the TN coverage, and the TN coverage is overlapped with the NTN coverage, the time-domain unit includes an uplink time-domain unit corresponding to the target frequency.

In this case, the NTN satellite multiplexes only the uplink slot for uplink transmission with the terminal device, and adopts other frequencies or other slots for downlink transmission, such that the interference of the downlink signal transmitted by the NTN satellite to the terminal device on another terminal device within the TN coverage is avoided.

In some embodiments, the terminal device adopts the target uplink frequency for uplink transmission, and adopts the first time window configured at the downlink frequency for downlink transmission.

In some embodiments, the terminal device transmits an uplink signal over an uplink resource in a resource pool at the target frequency.

The target frequency is within the TN spectrum.

In some embodiments, in the case where the terminal device is outside the TN coverage at the target frequency, and the terminal device fails to detect the system information of the NTN cell, the terminal device transmits the uplink signal over the uplink resource in the resource pool at the target frequency.

In the case where the terminal device is outside the TN coverage at the target frequency, and the NTN satellite does not broadcast the system information, the terminal device transmits the uplink signal over the uplink resource in the resource pool at the target frequency when the NTN satellite passes through the position of the terminal device.

In summary, in the method according to the embodiments, the NTN signal is transmitted or received in the TN spectrum, such that the NTN multiplexes the operating frequency bands of the TN. Thus, the usage scenarios of the NTN diversify, the problem of a small number of frequency bands available for the NTN is solved, and the NTN communication capability is improved.

In the method according to the embodiments, the terminal device transmits the uplink signal over the uplink resource in the resource pool at the target frequency without detecting system information of the NTN cell .

FIG. 10 is a flowchart of a communication method based on an NTN according to some embodiments of the present disclosure. The method is performed by a terminal device, and includes the following processes.

In S701, system information of an NTN cell broadcast at a target downlink frequency is received.

The target downlink frequency is within a TN spectrum.

In the case where the NTN satellite determines that the target downlink frequency of the TN is multiplexable, the NTN satellite broadcasts the system information of the NTN cell at the frequency, such that the terminal device reads the system information and accesses the NTN, and the terminal device receives the system information.

In some embodiments, S701 is omitted, and S702 is performed.

In S702, an uplink configuration is received at a frequency dedicated to a satellite system.

The uplink configuration includes a target uplink frequency. The target uplink frequency is used for transmission of an uplink signal, and is within the TN spectrum.

In some embodiments, in the case where the NTN satellite may only multiplex the target uplink frequency, the terminal device fails to read the system information broadcast by the NTN satellite. In this case, the NTN satellite configures the target uplink frequency to the terminal device at the frequency dedicated to the satellite system, and the terminal device 110 transmits the uplink signal at the target uplink frequency.

In some embodiments, S702 is omitted, and S705 is performed upon S701.

In S705, first indication information is transmitted.

The first indication information is used to indicate whether the terminal device is within the TN coverage at the target frequency, or the first indication information is used to indicate whether the TN coverage at the target frequency is available at the position of the terminal device.

In some embodiments, the first indication information is that a device is within the TN coverage at the target frequency or outside the TN coverage at the target frequency. Alternatively, the first indication information is that the TN coverage at the target frequency is or is unavailable at the position of the terminal device, and the like.

In some embodiments, the first indication information is referred to as at least one of: an indication of the TN coverage at the target frequency, an indication of the TN coverage, or an indication of the TN coverage region at the target frequency, which is not limited in the embodiments of the present disclosure, and the embodiments are illustrated using the first indication information.

In some embodiments, the terminal device determines the TN coverage available at the position of the terminal device by measuring a strength of the downlink signal from the TN base station to transmit the first indication information, for example, by measuring at least one of the SSI, the RSSI, the RSRP, the RSRQ, the SINR, or the RSCP.

In the case where the measured signal strength is greater than or equal to a first threshold value, the TN coverage is available at the position of the terminal device. In the case where the measured signal strength is less than the first threshold value, the TN coverage is unavailable at the position of the terminal device 11.

Exemplarily, in the case where the TN coverage available at the position of the terminal device is determined by measuring the RSSI, and the first threshold value is -100 dBm, the TN coverage is available at the position of the terminal device when the measured RSSI is -50 dBm greater than -100 dBm, and the TN coverage is unavailable at the position of the terminal device when the measured RSSI is -120 dBm less than -100 dBm.

In some embodiments, the current geographic position of the terminal device is transmitted along with the first indication information.

The NTN satellite determines the TN coverage status of each terminal device within the NTN coverage by receiving the first indication information and the current geographic position from a plurality of terminal devices. For example, the terminal device determines, based on the first indication information, that the TN coverage is unavailable at the position of the terminal device, and determines, based on the current geographic position, that the terminal device 110 is at the geographic position illustrated in FIG. 2.

In S710, the NTN signal is transmitted or received within the TN spectrum.

In the embodiments, S701 and S702 are optional. One or two of the processes may be omitted or replaced in different embodiments. For example, S701 is omitted, and the procedure is started from S702.

S701, S705, and S710 may be implemented as independent embodiments, and S702, S705, and S710 may be implemented as independent embodiments, which are not limited herein.

S701 may be implemented as an independent embodiment. For example, S701 is separately performed as a method for receiving system information.

S702 may be implemented as an independent embodiment. For example, S702 is separately performed as a method for receiving an uplink configuration.

S705 may be implemented as an independent embodiment. For example, S705 is separately performed as a method for transmitting information.

S710 may be implemented as an independent embodiment. For example, S710 is separately performed as a communication method based on an NTN.

In summary, in the method according to the embodiments, the NTN signal is transmitted or received in the TN spectrum, such that the NTN multiplexes the operating frequency bands of the TN. Thus, the usage scenarios of the NTN diversify, the problem of a small number of frequency bands available for the NTN is solved, and the NTN communication capability is improved.

In the method according to the embodiments, the system information of the NTN cell broadcast at the target downlink frequency is received, such that the terminal device reads the system information, and accesses the NTN.

In the method according to the embodiments, the uplink configuration is received at a frequency dedicated to the satellite system, and the uplink configuration includes a target uplink frequency, such that the terminal device transmits the uplink signal at the target uplink frequency in the case where the NTN satellite only multiplexes the target uplink frequency.

In the method according to the embodiments, the first indication information is transmitted, and thus the NTN satellite determines the overlap of the TN coverage of the terminal device, such that the workload of the NTN satellite is reduced.

FIG. 11 is a flowchart of a communication method based on an NTN according to some embodiments of the present disclosure. The method is performed by an NTN satellite, and includes the following process.

S1110, an NTN signal is transmitted or received within a TN spectrum.

In some embodiments, the NTN signal is transmitted at a target frequency, The target frequency is within the TN spectrum.

In some embodiments, the target frequency includes:
a target uplink frequency, or
a target downlink frequency, or
a target uplink frequency and a target downlink frequency.

In some embodiments, in the case where the terminal device is outside the TN coverage, and the TN coverage is overlapped with the NTN coverage, the target frequency includes the target uplink frequency.

In some embodiments, the NTN signal is transmitted over a first beam, or
the NTN signal is transmitted over at least one second beam, and the coverage of the second beam is smaller than the coverage of the first beam.

FIG. 12 is a schematic diagram of a communication method based on an NTN according to some embodiments of the present disclosure. FIG. 12 includes an NTN satellite 120, a first terminal device 210, a second terminal device 220, and a terrestrial base station 140.

The NTN transmits the NTN signal over a wide beam (the first beam) for coverage to increase the coverage. However, the coverage of the wide beam is overlapped with the coverage of a plurality of TNs, such that the NTN is difficult to directly multiplex the uplink frequency and the downlink frequency of the TN. Thus, at least one narrow beam (the second beam) may be used to transmit the NTN signal to reduce the possibility of the overlap between the NTN coverage and the TN coverage.

As illustrated in FIG. 12, the coverage corresponding to the first beam is a region 301. The region 301 is overlapped with a region 302 corresponding to the TN coverage. The second beam includes at least one of beam 1, beam 2, and beam 3 in the drawing, and the embodiments are illustrated using an example where the NTN signal is transmitted over beam 3.

Although the first terminal device 210 is outside the region 302, the communication between the NTN satellite 120 and the first terminal device 210 over the first beam may interference between the TN and the NTN satellite 120, and thus bidirectional communication between the NTN satellite 120 and the first terminal device 210 is achieved over the beam 3.

In some embodiments, the NTN signal is transmitted within a first time window.

The first time window is independent of a second time window. The first time window is configured to transmit the NTN signal, and the second time window is used to transmit the TN signal.

In some embodiments, the first time window includes at least one of:
a time window configured in an uplink frequency, or
a time window configured in a downlink frequency.

In some embodiments, the time window configured in the uplink frequency is the same as the time window configured in the downlink frequency, or
the time window configured in the uplink frequency is different from the time window configured in the downlink frequency.

In some embodiments, the NTN signal is transmitted within a time-domain unit corresponding to a target frequency.

In some embodiments, in the case where the terminal device is outside the TN coverage, and the TN coverage is overlapped with the NTN coverage, the time-domain unit includes an uplink time-domain unit corresponding to the target frequency.

In some embodiments, the uplink signal transmitted by the terminal device over an uplink resource in a resource pool at the target frequency is received.

The target frequency is within the TN spectrum.

In some embodiments, in the case where the terminal device is outside the TN coverage at the target frequency, and the terminal device fails to detect the system information of the NTN cell, the uplink signal transmitted by the terminal device over the uplink resource in the resource pool at the target frequency is received.

For the specific implementation details of the communication method based on the NTN, reference may be made to embodiments of the terminal device, which are not repeated herein.

In summary, in the method according to the embodiments, the NTN signal is transmitted or received within the TN spectrum, such that the NTN multiplexes the operating frequency bands of the TN. Thus, the usage scenarios of the NTN diversify, the problem of a small number of frequency bands available for the NTN is solved, and the NTN communication capability is improved.

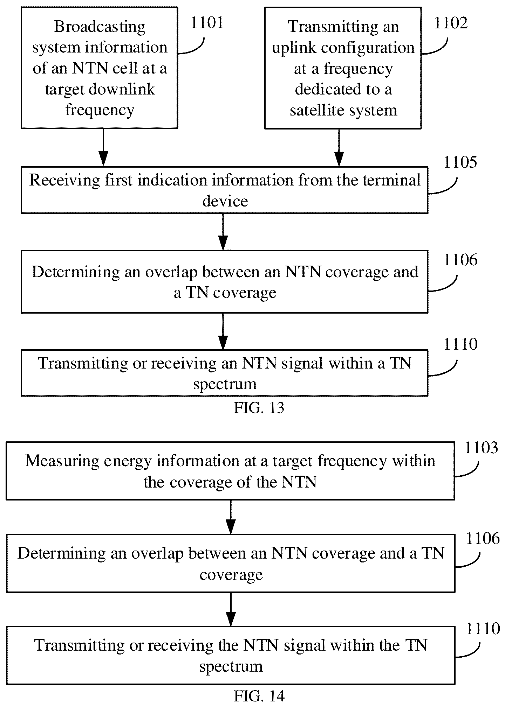

FIG. 13 is a flowchart of a communication method based on an NTN according to some embodiments of the present disclosure. The method is performed by an NTN satellite, and includes the following processes.

In S1101, system information of an NTN cell is broadcast at a target downlink frequency.

The target downlink frequency is within the TN spectrum.

In some embodiments, S1101 is omitted, and S1102 is performed.

For the specific implementation details of S1101, reference may be made to S701 in the embodiment of FIG. 11, which are not repeated herein.

In S1102, an uplink configuration is transmitted at a frequency dedicated to a satellite system.

The uplink configuration includes a target uplink frequency. The target uplink frequency is used for transmission of an uplink signal by a terminal device, and the target uplink frequency is within the TN spectrum.

In some embodiments, S1102 is omitted, and S1105 is performed upon S1101.

For the specific implementation details of S1102, reference may be made to S702 in the embodiment of FIG. 11, which are not repeated herein.

In S1105, first indication information from the terminal device is received.

The first indication information is used to indicate whether the terminal device is within a TN coverage at the target frequency, or the first indication information is used to indicate whether the TN coverage at the target frequency is available at the position of the terminal device.

In some embodiments, the current geographic position of the terminal device is transmitted along with the first indication information.

For the specific implementation details of S1105, reference may be made to S705 in the embodiment of FIG. 11, which are not repeated herein.

In S1106, an overlap between the NTN coverage and the TN coverage is determined.

In some embodiments, the overlap between the NTN coverage and the TN coverage is determined based on the first indication information. For example, the first indication information indicates that the TN coverage is available at the position of the terminal device, and the NTN satellite determines that the NTN coverage is overlapped with the TN coverage.

In some embodiments, the overlap between the NTN coverage and the TN coverage is determined by receiving the first indicative information transmitted by a plurality of terminal devices for a comprehensive determination.

In some embodiments, the overlap between the NTN coverage and the TN coverage is determined based on the first indication information and the current geographic position of the terminal device. For example, the first indication information indicates that the TN coverage is unavailable at the position of the terminal device, the current geographic position of the terminal device indicates that the terminal device is at the geographic position as illustrated in FIG. 3, and the NTN satellite determines that the NTN coverage is overlapped with the TN coverage and the terminal device is outside the TN coverage.

In S1110, an NTN signal is transmitted or received within the TN spectrum.

In some embodiments, the NTN signal is transmitted or received within the TN spectrum based on the overlap between the NTN coverage and the TN coverage.

In some embodiments, in the case where the NTN coverage is not overlapped with the TN coverage, the NTN signal is transmitted or received within the TN spectrum over at least one second beam.

In the case where the NTN coverage is overlapped with the TN coverage, the NTN signal is transmitted or received within a first time window, or the NTN signal is transmitted or received at a target frequency.

The coverage of the second beam is less than the NTN coverage. The first time window is configured to transmit the NTN signal. The target frequency is within the TN spectrum.

Exemplarily, in FIG. 2, the NTN signal is transmitted or received within the TN spectrum over at least one second beam. In FIG. 3, the NTN signal is transmitted or received at frequency f. In FIG. 4, the NTN signal is transmitted or received within the first time window.

In some embodiments, in the case where the NTN coverage is overlapped with the TN coverage, the NTN signal is transmitted or received within the TN spectrum over at least one second beam.

For the specific implementation details of S1110, reference may be made to S710 in the embodiment of FIG. 7, which are not repeated herein.

In the embodiments, S1101, S1102, and S1106 are optional, and one or more of the processes may be omitted or replaced in different embodiments. For example, S1101 is omitted, and the procedure is started from S1102.

S1101, S1105, S1106, and S1110 may be implemented as independent embodiments, and S1102, S1105, S1106, and S1110 may be implemented as independent embodiments, which are not limited herein.

S1101 may be implemented as an independent embodiment. For example, S1101 is separately performed as a method for transmitting system information.

S1102 may be implemented as an independent embodiment. For example, S1102 is separately performed as a method for transmitting an uplink configuration.

S1105 may be implemented as an independent embodiment. For example, S1105 is separately performed as a method for receiving information.

S1106 may be implemented as an independent embodiment. For example, S1106 is separately performed as a method for determining a coverage overlap status.

S1110 may be implemented as an independent embodiment. For example, S1110 is separately performed as a communication method based on an NTN.

In summary, the method according to the embodiments, the NTN signal is transmitted or received within the TN spectrum, such that the NTN multiplexes the operating frequency bands of the TN. Thus, the usage scenarios of the NTN diversify, the problem of a small number of frequency bands available for the NTN is solved, and the NTN communication capability is improved.

In the method according to the embodiments, the system information of the NTN cell is broadcast at the target downlink frequency, such that the terminal device reads the system information, and accesses the NTN.

In the method according to the embodiments, the uplink configuration is transmitted at a frequency dedicated to the satellite system, and the uplink configuration includes a target uplink frequency, such that the terminal device transmits the uplink signal at the target uplink frequency in the case where the NTN satellite only multiplexes the target uplink frequency.

In the method according to the embodiments, the first indication information from the terminal device is received, and thus the NTN satellite determines the overlap of the NTN coverage and the TN coverage, such that the workload of the NTN satellite is reduced.

FIG. 14 is a flowchart of a communication method based on an NTN according to some embodiments of the present disclosure. The method is performed by an NTN satellite, and includes the following processes.

In S1103, energy information at a target frequency within the coverage of the NTN is measured.

The energy information is used to indicate whether the NTN coverage is overlapped with the TN coverage.

In some embodiments, the NTN satellite measures the energy information at the target frequency within the NTN coverage (typically the coverage of the first beam). In a case where the measured energy information is greater than a second threshold value, the TN is within the NTN coverage.

In some embodiments, the energy information is represented by at least one of the SSI, the RSSI, the SNR, the RSRP, the RSRQ, the SINR, or the RSCP. The manner of representing the energy information is not limited in the embodiments of the present disclosure, and the embodiments are described using an example of the SNR. Exemplarily, in the case where the second threshold value is 20 dB, and the measured energy information is 25 dB greater than the second threshold value, the TN is within the coverage.

In S 1106, the overlap between the NTN coverage and the TN coverage is determined.

In some embodiments, the overlap between the NTN coverage and the TN coverage is determined based on the energy information at the target frequency.

In some embodiments, in the case where the energy information is greater or equal to the first threshold, the NTN coverage is overlapped with the TN coverage. In the case where the energy information is less than the first threshold, the NTN coverage is not overlapped with the TN coverage.

In some embodiments, the NTN signal is transmitted within a first time window at the target frequency. Within the first time window, a plurality of NTN satellites contend for the right to use the target frequency.

In the case where energy information measured by an NTN satellite is greater than a third threshold value, other NTN satellites occupy the target frequency. The third threshold value is equal to or not equal to the second threshold value. In this case, the energy information within the first time window is measured again upon a duration, or the energy information within another time window is measured. In the case where measured energy information is less than a fourth threshold value, the NTN satellite transmits the NTN signal at the target frequency. The fourth threshold value is equal to or is not equal to the third threshold value.

In S1110, the NTN signal is transmitted or received within the TN spectrum.

In the embodiments, S1103 is optional, and may be omitted or replaced in different embodiments. For example, S1103 is omitted, and the procedure is started from S1106.

S1106 and S1110 may be implemented as separate embodiments, which are not limited herein.

S1103 may be implemented as an independent embodiment. For example, S1103 is separately practiced as a method for measuring energy information.

S1106 may be implemented as an independent embodiment. For example, S1106 is separately practiced as a method for determining coverage overlap.

S1110 may be implemented as an independent embodiment. For example, S1110 is separately practiced as a communication method based on an NTN.

In summary, in the method according to the embodiments, the NTN signal is transmitted or received within the TN spectrum, such that the NTN multiplexes the operating frequency bands of the TN. Thus, the usage scenarios of the NTN diversify, the problem of a small number of frequency bands available for the NTN is solved, and the NTN communication capability is improved.

In the method according to the embodiments, the energy information at the target frequency within the NTN coverage is measured to autonomously determine the overlap between the NTN coverage and the TN coverage, such that the workload of the terminal device and the power consumption of the terminal device are reduced.

In the above embodiments, the processes with the same serial number may be the same process. The embodiments corresponding to FIG. 5, the embodiments corresponding to FIG. 6, the embodiments corresponding to FIG. 7, the embodiments corresponding to FIG. 10, the embodiments corresponding to FIG. 11, the embodiment corresponding to FIG. 13, and the embodiments corresponding to FIG. 14 may be implemented individually or in combination, which is not limited in the present disclosure.

In some embodiments, communication between the terminal device and the NTN satellite is achieved on the basis of existing hardware of the terminal device to make full use of the existing TN spectrum. Several typical scenarios are as follows.
(1) The NTN coverage region is outside the TN coverage region.

As illustrated in FIG. 2, in the scenario, the NTN coverage region 201 is outside the TN coverage region 202, for example, in the sea. Although the TN and the NTN transmit signals at the same frequency f, the transmission and reception of the signals by the first terminal device 210 and the transmission and reception of the signals by the NTN satellite 120 and the TN do not affect each other. Thus, the NTN satellite 120 only recognizes the region 201 to communicate with the first terminal device 210 in the region 201 at the same frequency f as the TN.

(2) The NTN coverage region is overlapped with the TN coverage region, and the terminal device is outside the TN coverage region.

As illustrated in FIG. 3, in the scenario, the NTN coverage region 301 includes the TN coverage region 302 (a size of the NTN cell is usually much greater than a size of the TN cell, and an NTN cell may be overlapped with a plurality of TN cells). The first terminal device 210 is within the NTN coverage region 301, and is outside the TN coverage region 302. In the scenario, possible interference cases (illustrated as dotted lines in FIG. 3) include the following cases.
2-1. The uplink signal transmitted by the second terminal device 220 to the terrestrial base station 140 may interfere with reception, by the satellite 120, of the uplink signal from the first terminal device 210.
2-2. The downlink signal transmitted by the NTN satellite 120 to the first terminal device 210 may interfere with reception, by the second terminal device 220, of the downlink signal from the terrestrial base station 140.

(3) The NTN coverage region is overlapped with the TN coverage region, and the terminal device is within the TN coverage region.

As illustrated in FIG. 4, in the scenario, the NTN coverage region 401 is overlapped with the TN coverage region 402, and the first terminal device 210 communicating with the NTN satellite 120 is within the TN coverage region 402. The possible interference cases include the following cases.
3-1. The uplink signal transmitted by the first terminal device 210 to the NTN satellite 120 may interfere with reception, by the terrestrial base station 140, of the uplink signal from the second terminal device 220.
3-2. The downlink signal transmitted by the terrestrial base station 140 to the second terminal device 220 may interfere with reception, by the first terminal device 210, of the downlink signal from the NTN satellite 120.
3-3. The uplink signal transmitted by the second terminal device 220 to the terrestrial base station 140 may interfere with reception, by the NTN satellite 120, of the uplink signal from the first terminal device 210.
3-4. The downlink signal transmitted by the NTN satellite 120 to the first terminal device 210 may interfere with reception, by the second terminal device 220, of the downlink signal from the terrestrial base station 140.

The solutions are described hereinafter.

Firstly, for the above scenarios, the NTN satellite needs to determine whether the NTN satellite is overlapped with the TN coverage region within a beam coverage.

Approach 1: The terminal device reports whether the terminal device is within the coverage region of the TN base station at the target frequency, and reports the information to the NTN satellite.

For example, the terminal device measures a strength of the downlink signal of the TN base station to determine the TN coverage of the position of the terminal device. In the case where the measured signal strength is greater than a threshold, the terminal device is within the TN coverage, otherwise, the terminal device is outside the TN coverage.

For the report of the TN coverage indication information at the target frequency of the position of the terminal device, a "TN coverage indication at the target frequency" is introduced.

The indication information is that a device is within the TN coverage at the target frequency or outside the TN coverage at the target frequency.

Alternatively, the indication is that TN coverage at the target frequency is available or unavailable at the position of the terminal device.

Upon receiving the TN coverage indication information at the target frequency of the terminal device, the NTN satellite determines whether the target frequency is adopted at the position of the current terminal device for communication. However, the problem is that the coverage of the NTN satellite is usually great, such that the frequency is generally adopted in a case of a plurality of terminal devices. That is, whether the TN coverage is available at a greater range (a coverage of a beam of the NTN satellite on the ground). In the embodiments of the present disclosure, the coverage and the coverage region have the same meaning.

The NTN satellite needs to know information of the geographic position of the current terminal device to solve the problem. The information may be that the geographic position information is reported to the NTN satellite when the terminal device reports the TN coverage indication information. Thus, the NTN satellite may count the TN coverage measured and reported by more terminal devices, and then determine that the terminal device within the coverage of the beam of the NTN satellite is in the scenario illustrated in FIG. 2, FIG. 3, or FIG. 4.

Approach 2: The NTN satellite measures energy information at the target frequency;

In the approach, the NTN satellite directly measures energy information at the target frequency within a target region (usually a beam coverage). In a case where the measured energy information is greater than a threshold A, the TN is in the region. The approach distinguishes the scenario illustrated in FIG. 2, and may not distinguish the scenario illustrated in FIG. 3 from the scenario illustrated in FIG.4.

In addition, in method 2 of a method for multiplexing a frequency by the NTN and the TN hereinafter, an NTN multiplexing window is defined. As a plurality of NTN systems/satellites may contend for the right to use the frequency within the NTN multiplexing window, in a case where the NTN satellite measures that the energy of the target region at the target frequency is greater than a threshold B (B is equal to or not equal to A), another NTN satellite are occupying the target frequency for communication. In this case, the method for redetecting the energy information within the NTN multiplexing window may be used upon a duration (the NTN multiplexing window used in redetecting the energy is the NTN multiplexing window used in previous detection of the energy or another NTN multiplexing window). In a case where the energy information is less than a threshold C (C is equal to or not equal to B), the NTN satellite communicates with other devices using the target frequency.

In FIG. 3, the overlapping coverage scenario in FIG. 3 changes to the non-overlapping coverage scenario in FIG. 2 by adjusting a width of the beam of the NTN satellite by the NTN satellite.

Secondly, a method for multiplexing a frequency by the NTN and the TN

Method 1: The NTN multiplexes the uplink frequency and the downlink frequency of the TN.

The method is generally applicable to the scenario where the NTN coverage is not overlapped with the TN coverage illustrated in FIG. 2.

The NTN usually use a wide beam for coverage to increase the coverage, such that the NTN coverage is overlapped with the coverage of a plurality of TNs, and the NTN is difficult to directly multiplex the uplink frequency and the downlink frequency of the TN. In order to solve the problem, the NTN adopts a plurality of narrow beams for terrestrial coverage to reduce the overlap between the NTN coverage and the TN coverage.

As illustrated in FIG. 12, in a case where the NTN satellite 120 adopts the wide beam, a greater coverage (the region 301) is achieved. In this case, the coverage of the NTN satellite 120is overlapped with the TN coverage (the region 302). Although the first terminal device 210 is actually outside the TN coverage In this case, downlink interference to the TN is caused when the NTN satellite 120 communicates with the first terminal device 210 over the wide beam.

In a case where the NTN satellite 120 adopts a plurality of narrow beams to achieve the coverage of the region, bidirectional communication between the NTN satellite 120 and the first terminal device 210 is achieved over the beam 3 by the method described above in the portion that "the NTN satellite needs to determine whether the NTN satellite is overlapped with the TN coverage region within the coverage of one beam."

Method 2: The NTN multiplexes the uplink frequency and the downlink frequency of the TN within a first time window;

The method is applicable to scenarios where the NTN coverage is overlapped with the TN coverage as illustrated in FIG. 3 and FIG. 4.

In the case where the NTN satellite determines that the current coverage is overlapped with the TN coverage, and the served terminal device is partially or fully within the TN coverage, the use at the same target frequency causes the same frequency interference. Therefore, a way is to multiplex the target frequency using the TDM.

For the operating mode of the TDM, an NTN operating window (the first time window) is defined only at the uplink frequency, or an NTN operating window is defined only at the downlink frequency, or an NTN operating window is defined at both the uplink frequency and the downlink frequency (for the window, the same window configuration is used for the uplink and the downlink, or different window configurations are used for the uplink and the downlink). As illustrated in FIG. 9, the first time window 910 may be periodically configured, and configuration parameters include a window length T1 a window period T, and the like. The configuration may be configured by the TN base station or predefined.

Method 3: The NTN multiplexes only the TN uplink frequency.

In a case where the NTN satellite determines that the current coverage is overlapped with the TN coverage, and the served terminal devices are outside the TN coverage, as illustrated in FIG. 8, the NTN satellite may multiplex only the target uplink frequency fUL (for the FDD band), or the NTN satellite uses the uplink slot corresponding to the target frequency (for the TDD band) for uplink transmission with the first terminal device 210. For downlink transmission, another frequency is used to avoid the interference of the downlink signal transmitted by the NTN satellite 120 to the first terminal device 210 on the second terminal device 220 within the TN coverage.

The interference of the uplink signal transmitted in communication between the second terminal device 220 and the terrestrial base station 140 on the NTN satellite 120 is not further considered, because the first terminal device 210 usually uses uplink enhancement methods, such as repeated transmission to increase the signal-to-noise ratio, and the signal transmitted by the second terminal device 220 is weaker for the NTN satellite 120 as the receiver. Thus, the interference of the second terminal device 220 on reception of the NTN satellite 120 is within a controllable range.

The above methods 2 and 3 may be combined. In this way, the first terminal device 210 uses the target uplink frequency fUL for uplink transmission, and uses the first time window to transmit the signal at the target downlink frequency fDL for downlink transmission.

Thirdly, a method for the terminal device to access the NTN satellite at the target frequency

In a case where the NTN satellite determines that the target downlink frequency fDL of the TN is multiplexable on a beam, the NTN satellite broadcasts system information at the frequency, such that the terminal device reads the system information and accesses the NTN.

In a case where the NTN satellite only multiplexes the target uplink frequency fUL of the TN on a beam, the terminal device fails to read the system information broadcast by the NTN satellite. In this case, two methods may be used.

Method 1: The NTN satellite configures the target uplink frequency fUL to the terminal device at the frequency dedicated to the satellite system, and then the terminal device transmits the uplink signal at the target uplink frequency fUL based on the configuration.

Method 2: A resource pool at the target frequency is predefined. In a case where the terminal device detects that the terminal device is outside the TN coverage at the target frequency and the terminal device fails to detect the system information broadcast by the NTN satellite, the terminal device tries to transmit the uplink signal in the resource pool when the NTN satellite passes through the region.

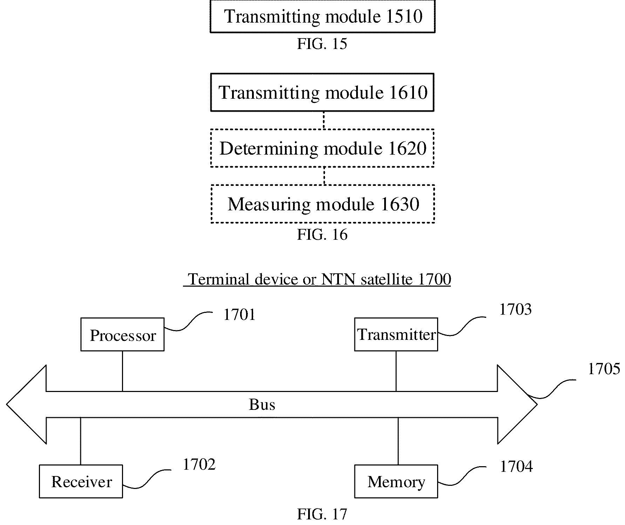

FIG. 15 a block diagram of a terminal communication apparatus according to some embodiments of the present disclosure. The terminal communication apparatus may be practiced as a terminal device, or practiced as a part of a terminal device, through a software or a hardware or a combination thereof. The terminal communication apparatus includes a transmitting module 1510. The function of the transmitting module 1510 is implemented through a receiver or a transmitter in the terminal device.

The transmitting module 1510 is configured to transmit or receive the NTN signal within the TN spectrum.

In some embodiments, the NTN signal is transmitted at a target frequency, wherein the target frequency is within the TN spectrum.

The TN spectrum represents a frequency distribution curve in the TN and the NTN signal represents a signal that may be transmitted in the NTN.

By multiplexing the TN spectrum, the NTN satellite transmits the NTN signal to the terminal communication apparatus at the target frequency within the TN spectrum, such that the usage scenarios of the NTN diversify, and the problem of a small number of frequency bands available for the NTN is solved.

In some embodiments, the target frequency includes:
a target uplink frequency, or
a target downlink frequency, or
a target uplink frequency and a target downlink frequency.

In an FDD scenario, the target frequency includes the target uplink frequency or the target downlink frequency. In a TDD scenario, the target frequency includes the target uplink frequency and the target downlink frequency.

In some embodiments, in the case where the terminal communication apparatus is outside the TN coverage, and the TN coverage is overlapped with the NTN coverage, the target frequency includes the target uplink frequency. In this case, the NTN satellite multiplexes only the target uplink frequency for uplink transmission with a first terminal communication apparatus and adopts another frequency for downlink transmission, and the terrestrial base station and a second terminal communication apparatus transmit signals at the target frequency. By multiplexing only the target uplink frequency, the interference of the downlink signal transmitted by the NTN satellite to the first terminal communication apparatus on the second terminal communication apparatus within the TN coverage is avoided.

As the first terminal communication apparatus generally uses the uplink enhancement methods, such as repeated transmission to increase the signal-to-noise ratio, and the uplink signal transmitted by the second terminal communication apparatus to the terrestrial base station is weaker for the NTN satellite, the interference of the uplink signal transmitted by the second terminal communication apparatus on the NTN satellite is not further considered, and the interference is within a controllable range.

In some embodiments, the NTN signal is transmitted within the first time window.

The first time window is independent of the second time window, wherein the first time window is configured to transmit the NTN signal, and the second time window is configured to transmit the TN signal.

As the same target frequency for the NTN and the TN may cause the same frequency interference, the TDM is used. The first time window for transmitting the NTN signal is independent of the second time window for transmitting the TN signal.

In some embodiments, the first time window includes at least one of:
a time window configured in an uplink frequency, or
a time window configured in a downlink frequency.

The first time window may be configured in the uplink frequency, in the downlink frequency, or in both the uplink frequency and the downlink frequency.

In some embodiments, the time windows configured in the uplink frequency is the same as the downlink frequency, or
the time windows configured in the uplink frequency is different from the downlink frequency.

The time window may be configured by the TN base station or may be predefined. The time window may be periodically configured, wherein configuration parameters include a window length, a window period, and the like.

In some embodiments, the NTN signal is transmitted within a time-domain unit corresponding to the target frequency.

In some embodiments, in the case where the terminal communication apparatus is outside the TN coverage, and the TN coverage is overlapped with the NTN coverage, the time-domain unit includes an uplink time-domain unit corresponding to the target frequency.

In the way, the NTN satellite multiplexes only an uplink slot for uplink transmission with the terminal communication apparatus, and adopts another frequency or another slot for downlink transmission, such that the interference of the downlink signal transmitted by the NTN satellite to the terminal communication apparatus on another terminal communication apparatus within the TN coverage is avoided.

In some embodiments, the terminal communication apparatus adopts the target uplink frequency for uplink transmission, and adopts the first time window configured at the downlink frequency for downlink transmission.

In some embodiments, the transmitting module 1510 is further configured to transmit first indication information, wherein the first indication information is used to indicate whether the terminal communication apparatus is within the TN coverage at the target frequency, or, the first indication information is used to indicate whether the TN coverage at the target frequency is available at the position of the terminal communication apparatus.

In some embodiments, the first indication information is that a device is within the TN coverage at the target frequency or outside the TN coverage at the target frequency. Alternatively, the first indication information is that the TN coverage at the target frequency is available or unavailable at the position of the terminal device.

In some embodiments, the terminal communication apparatus determines the TN coverage of the position of the terminal communication apparatus by measuring the strength of the downlink signal of the TN base station to measure the first indication information, for example, by measuring at least one of the SSI, the RSSI, the RSRP, the RSRQ, the SINR, or the RSCP.

In the case where the measured signal strength is greater than or equal to the first threshold value, the TN coverage is available at the position of the terminal communication apparatus. In the case where the measured signal strength is less than the first threshold value, the TN coverage is unavailable at the position of the terminal communication apparatus.

Exemplarily, in the case where the TN coverage available at the position of the terminal communication apparatus is determined by measuring the RSSI, and the first threshold value is - 100 dBm, the TN coverage is available at the position of the terminal communication apparatus when the measured RSSI is -50 dBm greater than -100 dBm, and the TN coverage is unavailable at the position of the terminal communication apparatus when the measured RSSI is -120 dBm less than -100 dBm.

In some embodiments, the transmitting module 1510 is further configured to transmit the current geographic position of the terminal communication apparatus along with the first indication information.

The NTN satellite determines the TN coverage of each terminal communication apparatus within the NTN coverage by receiving the first indication information and the current geographic position from a plurality of terminal communication apparatuses.

In In some embodiments, the transmitting module 1510 is further configured to receive system information of an NTN cell broadcast at a target downlink frequency.

The target downlink frequency is within the TN spectrum.

In the case where the NTN satellite determines the target downlink frequency of the TN is multiplexable, the NTN satellite broadcasts the system information of the NTN cell at the frequency, such that the terminal communication apparatus reads the system information and accesses the NTN, and the terminal communication apparatus receives the system information.

In In some embodiments, the transmitting module 1510 is further configured to receive an uplink configuration at a frequency dedicated to the satellite system, wherein the uplink configuration includes a target uplink frequency, and the target uplink frequency is used for transmission of an uplink signal.

The target uplink frequency is within the TN spectrum.

In some embodiments, in the case where the NTN satellite only multiplexes the target uplink frequency, the terminal communication apparatus fails to read the system information broadcast by the NTN satellite. In this case, the NTN satellite configures the target uplink frequency to the terminal communication apparatus at the frequency dedicated to the satellite system, and the terminal communication apparatus transmits the uplink signal at the target uplink frequency.

In some embodiments, the transmitting module 1510 is further configured to transmit the uplink signal over the uplink resource in the resource pool at the target frequency.

The target frequency is within the TN spectrum.

In some embodiments, the transmitting module 1510 is configured to transmit the uplink signal over the uplink resource in the resource pool at the target frequency in the case where the terminal communication apparatus is outside the TN coverage at the target frequency and the terminal communication apparatus fails to detect the system information of the NTN cell.

In the case where the terminal communication apparatus is outside the TN coverage at the target frequency, and the NTN satellite does not broadcast the system information, the terminal communication apparatus transmits the uplink signal over the uplink resource in the resource pool at the target frequency when the NTN satellite passes through the position of the terminal communication apparatus.

In the embodiments, the transmitting module 1510includes a plurality of transmitting modules, such as a first transmitting module, and a second transmitting module. The first transmitting module is configured to transmit or receive the NTN signal within the TN spectrum, and the second transmitting module is configured to transmit the first indication information, receive the system information of the NTN cell broadcast at the target downlink frequency, and receive the uplink configuration at the frequency dedicated to the satellite system. Alternatively, the first transmitting module is configured to transmit first indication information, receive system information of the NTN cell broadcast at the target downlink frequency, and receive the uplink configuration at the frequency dedicated to the satellite system, and the second transmitting module is configured to transmit or receive the NTN signal within the TN spectrum. The embodiments does not limit the functions of different transmitting modules.

The embodiments are illustrated using an example of one transmitting module 1510, and the number of transmitting modules 1510 is not limited.

For the functional description of the transmitting module 1510, reference may be made to description of S710 in the embodiments of FIG. 7 and S701, S702 and S705 in the embodiments of FIG. 10.

FIG. 16 is a block diagram of a network communication apparatus according to some embodiments of the present disclosure. The network communication apparatus may be practiced as an NTN satellite, or practiced as a part of an NTN satellite, through a software or a hardware or a combination of the two. The network communication apparatus includes a transmitting module 1610, a determining module 1620, and a measuring module 1630. The function of the transmitting module 1610 is implemented through a receiver or transmitter in the NTN satellite, and the functions of the determining module 1620 and the measuring module 1630 are implemented through a processor in the NTN satellite.

The transmitting module 1610 is configured to transmit or receive the NTN signal within the TN spectrum.

In some embodiments, the NTN signal is transmitted at a target frequency, wherein the target frequency is within the TN spectrum.

By multiplexing the TN spectrum, the network communication apparatus transmits the NTN signal with the terminal device at the target frequency within the TN spectrum, such that the usage scenarios of the network communication apparatus diversify, and the problem of a small number of frequency bands available for the NTN is solved.

In some embodiments, the target frequency includes:
a target uplink frequency, or
a target downlink frequency, or
a target uplink frequency and a target downlink frequency.

In some embodiments, in the case where the terminal device is outside the TN coverage, and the TN coverage is overlapped with the NTN coverage, the target frequency includes the target uplink frequency. In this case, the network communication apparatus multiplexes only the target uplink frequency for uplink transmission with the first terminal device and adopts another frequency for downlink transmission, and the terrestrial base station and the second terminal device transmit the signal at the target frequency. By multiplexing only the target uplink frequency, the interference of the downlink signal transmitted by the network communication apparatus to the first terminal device on the second terminal device within the TN coverage is avoided.

As the first terminal device generally uses the uplink enhancement methods, such as repeated transmission to increase the signal-to-noise ratio, and the uplink signal transmitted by the second terminal communication apparatus to the terrestrial base station is weaker for the network communication apparatus, the interference of the uplink signal transmitted by the second terminal device to the network communication apparatus is not further considered, and the interference is within a controllable range.

In some embodiments, the NTN signal is transmitted over the first beam, or
the NTN signal is transmitted over at least one second beam, wherein the coverage of the second beam is smaller than the coverage of the first beam.

The NTN transmits the NTN signal over a wide beam (the first beam) for coverage to increase the coverage. However, the coverage of the wide beam is overlapped with the coverage of a plurality of TNs, such that the NTN is difficult to directly multiplex the uplink frequency and the downlink frequency of the TN. Thus, at least one narrow beam (the second beam) may be used to transmit the NTN signal to reduce the overlap between the NTN coverage and the TN coverage.

In some embodiments, the NTN signal is transmitted within a first time window.

The first time window is independent of the second time window, wherein the first time window is configured to transmit the NTN signal, and the second time window is configured to transmit the TN signal.

As the same target frequency for the NTN and the TN may cause the same frequency interference, the TDM is used. The first time window for transmitting the NTN signal is independent of the second time window for transmitting the TN signal.

In some embodiments, the first time window includes at least one of:
a time window configured in an uplink frequency, or
a time window configured in the downlink frequency.

The first time window may be configured in the uplink frequency, in the downlink frequency, or in both the uplink frequency and the downlink frequency.

In some embodiments, the time window configured in the uplink frequency is the same as the time window configured in the downlink frequency, or
the time window configured in the uplink frequency is different from the time window configured in the downlink frequency.

The time window may be configured by the TN base station or may be predefined. The time window may be periodically configured, and configuration parameters include a window length, a window period, and the like.

In some embodiments, the NTN signal is transmitted in a time-domain unit corresponding to the target frequency.

In some embodiments, in the case where the terminal device is outside the TN coverage, and the TN coverage is overlapped with the NTN coverage, the time-domain unit includes an uplink time-domain unit corresponding to the target frequency.

In this case, the network communication apparatus multiplexes only the uplink slot for uplink transmission with the terminal device, and adopts another frequency or another slot for downlink transmission, such that the interference of the downlink signal transmitted by the network communication apparatus to the terminal device on another terminal device within the TN coverage is avoided.

In some embodiments, the determining module 1620 is configured to determine the overlap between the NTN coverage and the TN coverage.

The transmitting module 1610 is configured to transmit or receive the NTN signal within the TN spectrum based on the overlap between the NTN coverage and the TN coverage.

In some embodiments, the overlap between the NTN coverage and the TN coverage is determined based on the first indication information. For example, the first indication information indicates that TN coverage is available at the position of the terminal device, and the network communication apparatus determines that the NTN coverage is overlapped with the TN coverage.

In some embodiments, the first indication information from a plurality of terminal devices is received for a comprehensive determination, such that the overlap between the NTN coverage and the TN coverage is determined.

In some embodiments, the overlap between the NTN coverage and the TN coverage is determined based on the first indication information and the current geographic position of the terminal device.

In some embodiments, in the case where the NTN coverage is not overlapped with the TN coverage, the transmitting module 1610 is configured to transmit or receive the NTN signal within the TN spectrum over at least one second beam.

In the case where the NTN coverage is overlapped with the TN coverage, the NTN signal is transmitted or received within a first time window, or the NTN signal is transmitted or received at a target frequency.

The coverage of the second beam is less than the NTN coverage. The first time window is configured to transmit the NTN signal. The target frequency is within the TN spectrum.

In some embodiments, the transmitting module 1610 is further configured to receive the first indication information from the terminal device, wherein the first indication information is used to indicate whether the terminal device is within the TN coverage at the target frequency, or, the first indication information is used to indicate whether the TN coverage at the target frequency is available at the position of the terminal device.

In some embodiments, the first indication information is that a device is within the TN coverage at the target frequency or outside the TN coverage at the target frequency. Alternatively, the first indication information is that the TN coverage at the target frequency is available or unavailable at the position of the terminal device, and the like.

The determining module 1620 is configured to determine the overlap between the NTN coverage and the TN coverage based on the first indication information.

In In some embodiments, the transmitting module 1610 is further configured to receive the current geographic position of the terminal device along with the first indication information.

The determining module 1620 is configured to determine the overlap between the NTN coverage and the TN coverage based on the first indication information and the current position of the terminal device.

The network communication apparatus determines the TN coverage of each terminal device within the NTN coverage by receiving the first indication information and the current geographic positions from a plurality of terminal devices.

In In some embodiments, the measuring module 1630 is configured to measure energy information at the target frequency within the NTN coverage, wherein the energy information is used to indicate whether the NTN coverage is overlapped with the TN coverage.

The determining module 1620 is configured to determine the overlap between the NTN coverage and the TN coverage based on the energy information on the target frequency.

In some embodiments, in the case where the energy information is greater or equal to the first threshold, the NTN coverage is overlapped with the TN coverage.

In the case where the energy information is less than the first threshold, the NTN coverage is not overlapped with the TN coverage.

In some embodiments, the network communication apparatus measures energy information at a target frequency within the NTN coverage (typically the coverage of the first beam). In a case where the measured energy information is greater than the second threshold value, the TN is within the NTN coverage.

In some embodiments, the energy information is represented by at least one of the SSI, the RSSI, the SNR, the RSRP, the RSRQ, the SINR, or the RSCP. The manner of representing the energy information is not limited in the embodiments of the present disclosure, and the embodiments are described using an example of the SNR. Exemplarily, in the case where the second threshold value is 20 dB, and the measured energy information is 25 dB greater than the second threshold value, the TN is within the coverage.

In In some embodiments, the transmitting module 1610 is further configured to broadcast system information of the NTN cell at a target downlink frequency.

The target downlink frequency is within the TN spectrum.

In the case where the network communication apparatus determines that the target downlink frequency of the TN is multiplexable, the network communication apparatus broadcasts the system information of the NTN cell at the frequency, such that the terminal device reads the system information, and accesses the NTN.

In In some embodiments, the transmitting module 1610 is further configured to transmit the uplink configuration at the frequency dedicated to the satellite system, wherein the uplink configuration includes the target uplink frequency and the target uplink frequency is used for transmission of the uplink signal by the terminal device.

The target uplink frequency is within the TN spectrum.

In some embodiments, in the case where the network communication apparatus only multiplexes the target uplink frequency, the terminal device fails to read the system information broadcast by the network communication apparatus. In this case, the network communication apparatus configures the target uplink frequency to the terminal device at the frequency dedicated to the satellite system, and the terminal device transmits the uplink signal at the target uplink frequency.

In In some embodiments, the transmitting module 1610 is further configured to receive the uplink signal from the terminal device over the uplink resource in the resource pool at the target frequency.

The target frequency is within the TN spectrum.

In some embodiments, in the case where the terminal device is outside the TN coverage at the target frequency, and the terminal device fails to detect the system information of the NTN cell, the transmitting module 1610 is configured to receive the uplink signal from the terminal device over the uplink resource in the resource pool at the target frequency.

In the case where the terminal device is outside the TN coverage at the target frequency, and the network communication apparatus does not broadcast the system information, the terminal device transmits the uplink signal over the uplink resource in the resource pool at the target frequency when the network communication apparatus passes through the position of the terminal device.

In the embodiments, the transmitting module 1610 includes a plurality of transmitting modules, such as a first transmitting module, and a second transmitting module. The first transmitting module is configured to transmit or receive the NTN signal within the TN spectrum, and the second transmitting module is configured to receive the first indication information from the terminal device, broadcast the system information of the NTN cell at the target downlink frequency, and transmit the uplink configuration at the frequency dedicated to the satellite system. Alternatively, the first transmitting module is configured to receive the first indication information from the terminal device, broadcast the system information of the NTN cell at the target downlink frequency, and transmit the uplink configuration at the frequency dedicated to the satellite system, and the second transmitting module is configured to transmit or receive the NTN signal within the TN spectrum. The embodiments do not limit the functions of the different transmitting modules.

The embodiments are illustrated by one transmitting module 1610, and the number of transmitting modules 1610 is not limited.

For the functional description of the transmitting module 1610, reference may be made to description ofS1110 in the embodiments of FIG. 11 and S1101, S1102 and S1105 in the embodiments of FIG. 13.

For the functional description of the determining module 1620 , reference may be made to description ofS1106 in the embodiments of FIG. 13 and the embodiments of FIG. 14;
For the functional description of the measuring module 1630, reference may be made to description of S 1103 in the embodiments of FIG. 14.

FIG. 17 is a schematic structural diagram of a terminal device or an NTN satellite 1700 according to some embodiments of the present disclosure. The terminal device or the NTN satellite includes: a processor 1701, a receiver 1702, a transmitter 1703, a memory 1704, and a bus 1705.

The processor 1701 includes one or more processing cores. The processor 1701 implementing various functional applications and information processing by running a software program and a module. In some embodiments, the processor 1701 is configured to implement the functions and processes performed by the determining module 1620 and the measuring module 1630 described above.

The receiver 1702 and the transmitter 1703 may be practiced as a communication assembly. The communication assembly may be a communication chip. The communication assembly may be referred to as a transceiver. In some embodiments, the receiver 1702 is configured to implement the functions and processes of the transmitting module 1510 and the transmitting module 1610 described above. The transmitter 1703 may be configured to implement the functions and processes of the transmitting module 1510 and the transmitting module 1610 described above.

The memory 1704 is connected to the processor 1701 via the bus 1705.

The memory 1704 may be configured to store one or more instructions. The processor 1701 is configured to load and execute the one or more instructions to perform various processes in the above method embodiments.

In addition, the memory 1704 may be implemented by any type of volatile or non-volatile storage device or a combination thereof. The volatile or non-volatile storage device includes, but is not limited to: a disk, an optical disk, an electrically-erasable programmable read only memory (EEPROM), an erasable programmable read only memory (EPROM), a static random access memory (SRAM), a read-only memory (ROM), a magnetic memory, a flash memory, a programmable read-only memory (PROM).

In some embodiments, the receiver 1702 receives the signal/data independently, or the processor 1701 controls the receiver 1702 to receive the signal/data, or the processor 1701 requests the receiver 1702 to receive the signal/data, or the processor 1701 cooperates with the receiver 1702 to receive the signal/data.

In some embodiments, the transmitter 1703 transmits the signal/data independently, or the processor 1701 controls the transmitter 1703 to transmit the signal/data, or the processor 1701 requests the transmitter 1703 to transmit the signal/data, or the processor 1701 cooperates with the transmitter 1703 to transmit the signal/data.

In some embodiments, a computer-readable storage medium is provided. The computer-readable storage medium stores one or more programs. The one or more programs, when loaded and run by a processor, cause the processor to perform the communication method based on the NTN according to the method embodiments described above.

In some embodiments, a computer program product or a computer program is provided. The computer program product or the computer program, when loaded and run on a processor in a terminal device or an NTN satellite 1700, causes the terminal device or the NTN satellite 1700 performs the communication method based on the NTN according to the method embodiments described above.

A person of ordinary skill in the art may understand that all or some of the processes for implementing the above embodiments may be performed by a hardware, or may be performed by a program instructing a relevant hardware. The program may be stored in a computer-readable storage medium. The storage medium may be a read-only memory, a magnetic disk, an optical disk, and the like.

Described above are merely exemplary embodiments of the present disclosure and are not intended to limit the present disclosure. Any modifications, equivalent substitutions, improvements, and the like, made within the spirit and principle of the present disclosure should fall within the protection scope of the present disclosure.

## Claims

1. A communication method based on a non-terrestrial network (NTN), performed by a terminal device, the method comprising:
transmitting or receiving an NTN signal within a terrestrial network (TN) spectrum.

2. The method according to claim 1, wherein the NTN signal is transmitted at a target frequency, wherein the target frequency is within the TN spectrum.

3. The method according to claim 2, wherein the target frequency comprises:
a target uplink frequency; or
a target downlink frequency; or
a target uplink frequency and a target downlink frequency.

4. The method according to claim 3, wherein in a case where the terminal device is outside a TN coverage, and the TN coverage is overlapped with an NTN coverage, the target frequency comprises the target uplink frequency.

5. The method according to claim 1, wherein the NTN signal is transmitted within a first time window, the first time window being independent of a second time window, wherein the first time window is configured to transmit the NTN signal, and the second time window is configured to transmit a TN signal.

6. The method according to claim 5, wherein the first time window comprises at least one of:
a time window configured in an uplink frequency; or
a time window configured in a downlink frequency.

7. The method according to claim 6, wherein
the time window configured in the uplink frequency is the same as the time window configured in the downlink frequency; or
the time window configured in the uplink frequency is different from the time window configured in the downlink frequency.

8. The method according to claim 1, wherein the NTN signal is transmitted in a time-domain unit corresponding to a target frequency.

9. The method according to claim 8, wherein in a case where the terminal device is outside a TN coverage, and the TN coverage is overlapped with an NTN coverage, the time-domain unit comprises an uplink time-domain unit corresponding to the target frequency.

10. The method according to any one of claims 1 to 9, further comprising:
transmitting first indication information, wherein the first indication information is used to indicate whether the terminal device is within a TN coverage at a target frequency, or the first indication information is used to indicate whether a TN coverage at a target frequency is available at a position of the terminal device.

11. The method according to claim 10, further comprising:
transmitting a current geographic position of the terminal device along with the first indication information.

12. The method according to any one of claims 1 to 9, further comprising:
receiving system information of an NTN cell broadcast at a target downlink frequency, wherein the target downlink frequency is within the TN spectrum.

13. The method according to any one of claims 1 to 9, further comprising:
receiving an uplink configuration at a frequency dedicated to a satellite system, wherein the uplink configuration comprises a target uplink frequency, wherein the target uplink frequency is configured to transmit an uplink signal, and the target uplink frequency is within the TN spectrum.

14. The method according to any one of claims 1 to 9, wherein transmitting the NTN signal within the TN spectrum comprises:
transmitting an uplink signal over an uplink resource in a resource pool at a target frequency, wherein the target frequency is within the TN spectrum.

15. The method according to claim 14, wherein transmitting the uplink signal over the uplink resource in the resource pool at the target frequency comprises:
transmitting the uplink signal over the uplink resource in the resource pool at the target frequency in a case where the terminal device is outside a TN coverage at the target frequency and the terminal device does not detect system information of an NTN cell.

16. A communication method based on a non-terrestrial network (NTN), performed by an NTN satellite, the method comprising:
transmitting or receiving an NTN signal within a terrestrial network (TN) spectrum.

17. The method according to claim 16, wherein the NTN signal is transmitted at a target frequency, wherein the target frequency is within the TN spectrum.

18. The method according to claim 17, wherein the target frequency comprises:
a target uplink frequency; or
a target downlink frequency; or
a target uplink frequency and a target downlink frequency.

19. The method according to claim 18, wherein, in a case where a terminal device is outside a TN coverage, and the TN coverage is overlapped with an NTN coverage, the target frequency comprises the target uplink frequency.

20. The method according to claim 16, wherein the NTN signal is transmitted over a first beam; or the NTN signal is transmitted over at least one second beam, wherein a coverage of the at least one second beam is smaller than a coverage of the first beam.

21. The method according to claim 16, wherein the NTN signal is transmitted within a first time window, the first time window being independent of a second time window, wherein the first time window is configured to transmit the NTN signal, and the second time window is configured to transmit a TN signal.

22. The method according to claim 21, wherein the first time window comprises at least one of:
a time window configured in an uplink frequency; or
a time window configured in a downlink frequency.

23. The method according to claim 22, wherein
the time window configured in the uplink frequency is the same as the time window configured in the downlink frequency; or
the time window configured in the uplink frequency is different from the time window configured in the downlink frequency.

24. The method according to claim 16, wherein the NTN signal is transmitted in a time-domain unit corresponding to a target frequency.

25. The method according to claim 24, wherein in a case where a terminal device is outside a TN coverage and the TN coverage is overlapped with an NTN coverage, the time-domain unit comprises an uplink time-domain unit corresponding to the target frequency.

26. The method according to any one of claims 16 to 25, further comprising:
determining an overlap between an NTN coverage and a TN coverage;
wherein transmitting or receiving the NTN signal within the TN spectrum comprises:
transmitting or receiving the NTN signal within the TN spectrum based on the overlap between the NTN coverage and the TN coverage.

27. The method according to claim 26, wherein transmitting or receiving the NTN signal within the TN spectrum based on the overlap between the NTN coverage and the TN coverage comprising:
transmitting or receiving the NTN signal within the TN spectrum over at least one second beam in a case where the NTN coverage is not overlapped with the TN coverage; or
transmitting or receiving the NTN signal within a first time window, or, transmitting or receiving the NTN signal at a target frequency in a case where the NTN coverage is overlapped with the TN coverage;
wherein a coverage of the second beam is smaller than the NTN coverage, the first time window is configured to transmit the NTN signal, and the target frequency is within the TN spectrum.

28. The method according to claim 26, further comprising:
receiving first indication information from a terminal device, wherein the first indication information is used to indicate whether the terminal device is within a TN coverage at a target frequency, or the first indication information is used to indicate whether the TN coverage at a target frequency is available at a position of the terminal device;
wherein determining the overlap between the NTN coverage and the TN coverage comprises:
determining the overlap between the NTN coverage and the TN coverage based on the first indication information.

29. The method according to claim 28, further comprising:
receiving a current geographic position of the terminal device along with the first indication information;
wherein determining the overlap between the NTN coverage and the TN coverage based on the first indication information comprises:
determining the overlap between the NTN coverage and the TN coverage based on the first indication information and the current geographic position of the terminal device.

30. The method according to claim 26, further comprising:
measuring energy information at a target frequency within the NTN coverage, wherein the energy information is used to indicate whether the NTN coverage is overlapped with the TN coverage;
wherein determining the overlap between the NTN coverage and the TN coverage comprises:
determining the overlap between the NTN coverage and the TN coverage based on the energy information at the target frequency.

31. The method according to claim 30, wherein the NTN coverage is overlapped with the TN coverage in a case where the energy information is greater or equal to a first threshold; or the NTN coverage is not overlapped with the TN coverage in a case where the energy information is less than the first threshold.

32. The method according to any one of claims 16 to 25, further comprising:
broadcasting system information of an NTN cell at a target downlink frequency, wherein the target downlink frequency is within the TN spectrum.

33. The method according to any one of claims 16 to 25, further comprising:
transmitting an uplink configuration at a frequency dedicated to a satellite system, wherein the uplink configuration comprises a target uplink frequency, wherein the target uplink frequency is used for transmission of an uplink signal by a terminal device, and the target uplink frequency is within the TN spectrum.

34. The method according to any one of claims 16 to 25, wherein receiving the NTN signal within the TN spectrum comprises:
receiving an uplink signal from a terminal device over an uplink resource in a resource pool at a target frequency, wherein the target frequency is within the TN spectrum.

35. The method according to claim 34, wherein receiving the uplink signal from the terminal device over the uplink resource in the resource pool at the target frequency comprises:
receiving the uplink signal from the terminal device over the uplink resource in the resource pool at the target frequency in a case where the terminal device is outside a TN coverage at the target frequency and the terminal device does not detect system information of an NTN cell.

36. A terminal communication apparatus, comprising:
a transmitting module, configured to transmit or receive a non-terrestrial network (NTN) signal within a terrestrial network (TN) spectrum.

37. A network communication apparatus, comprising:
a transmitting module, configured to transmit or receive a non-terrestrial network (NTN) signal within a terrestrial network (TN) spectrum.

38. A terminal device, comprising:
a processor;
a transceiver, connected to the processor; and
a memory, configured to store one or more executable instructions of the processor;
wherein the processor is configured to load and execute the one or more executable instructions to perform the communication method based on the non-terrestrial network (NTN) as defined in any one of claims 1 to 15.

39. A non-terrestrial network (NTN) satellite, comprising:
a processor;
a transceiver, communicably connected to the processor; and
a memory, configured to store one or more executable instructions of the processor;
wherein the processor is configured to load and execute the one or more executable instructions to perform the communication method based on the non-terrestrial network (NTN) as defined in any one of claims 16 to 35.

40. A computer-readable storage medium, storing one or more programs, wherein the one or more programs, when loaded and run by a processor, cause the processor to perform the communication method based on the non-terrestrial network (NTN) as defined in any one of claims 1 to 35.

41. A computer program product, comprising: one or more computer instructions, wherein the one or more computer instructions are stored in a computer-readable storage medium, and when read from the computer-readable storage medium and executed by a processor, cause the processor to perform the communication method based on the non-terrestrial network (NTN) as defined in any one of claims 1 to 35.
